# EUROPÄISCHE PATENTSCHRIFT

(11) **EP 2 311 682 B1**
(45) Veröffentlichungstag und Bekanntmachung des Hinweises auf die Patenterteilung: **13.03.2013**
(21) Anmeldenummer: 10174603.0
(22) Anmeldetag: 31.08.2010
(51) Int. Cl.: B60K 26/02, B60K 31/18

(54) **Fahrpedaleinrichtung für ein Kraftfahrzeug**
Driving pedal device for a motor vehicle
Dispositif de pédale de conduite pour un véhicule automobile

(30) Priorität: 20.08.2010 DE 102010039583; 13.10.2009 DE 102009045608
(43) Veröffentlichungstag der Anmeldung: 20.04.2011
(73) Patentinhaber: Robert Bosch GmbH, 70442 Stuttgart (DE)
(72) Erfinder: Bauer, Bernhard, 71566, Althuette (DE); Diaz Alfonso, Jorge, 70734, Fellbach (DE); Klotzbuecher, Thomas, 73635, Rudersberg (DE)

(56) Entgegenhaltungen:
- EP-A1- 0 657 319
- DE-A1-102006 012 515
- US-A1- 2005 145 058

## Beschreibung

### Stand der Technik

Die Erfindung geht aus von einer Fahrpedaleinrichtung für ein Kraftfahrzeug nach dem Oberbegriff des Anspruchs 1.

Bei solchen Fahrpedaleinrichtungen mit einer Stellvorrichtung zur Einstellung der Rückstellkraft am Fahrpedal erhält der Fahrer über seinen Fahrpedalfuß eine haptische Rückmeldung über die momentane Veränderung der Betriebsbedingungen des Kraftfahrzeugs, damit er die Fahrpedalstellung an die Veränderungen der Betriebsdingungen anpassen kann. Vorzugsweise wird dabei die am Fahrpedal wirksame Rückstellkraft erhöht, wenn z.B. die zulässige Höchstgeschwindigkeit der momentan befahrenen Straße überschritten oder ein Mindestabstand zu einem vorausfahrenden Fahrzeug erreicht oder unterschritten wird. Die dann zur Betätigung des Fahrpedals erforderliche, erhöhte Betätigungskraft wird zum einen vom Fahrer als Signal empfunden, die Geschwindigkeit zu drosseln, zum anderen stellt sie ein Hemmnis dar, die Geschwindigkeit weiter zu erhöhen.

Bei einer gattungsgemäßen Fahrpedaleinrichtung (DE 102 51 035 A1) stützen sich zwei Rückstellfedern mit ihrem einen Ende an einem auf die Fußfläche des Fahrpedals wirkenden Rückstellhebel und mit ihrem anderen Ende an einem Federaufnahmehebel ab. Der wie der Rückstellhebel im Lagerblock schwenkbar gelagerte Federaufnahmehebel stützt sich mit seinem lagerfernen Ende an einer Kurve eines Kurvenzapfens einer Scheibe ab, die mit einem Segment eines kreisbogenförmigen Zahnkranzes versehen ist. Der Federaufnahmehebel, die Rückstellfedern und die Scheibe mit Zahnkranzsegment sind Teil der Stellvorrichtung, die noch durch ein mit dem Zahnkranzsegment kämmendes Zahnrad und einen das Zahnrad antreibenden Gleichstrommotor ergänzt wird. Bei Vorliegen unzulässiger Betriebsbedingungen oder an den Grenzen zulässiger Betriebsbedingungen, z. .B. bei Erreichen oder Überschreiten eines Tempolimits oder bei Erreichen oder Unterschreiten eines Mindestabstand zu einem vorausfahrenden Fahrzeug, wird durch das vom Motor angetriebene Zahnrad die Scheibe verdreht, wodurch sich das Ende des Federaufnahmehebels entlang des Kurvenzapfens bewegt und der Federaufnahmehebel um seinen Drehpunkt in Richtung Fahrpedal geschwenkt wird. Dadurch wird die Vorspannung der Rückstellfedern und damit die am Fahrpedal wirkende Rückstellkraft erhöht. Die erhöhte Rückstellkraft wirkt der Betätigungskraft spürbar entgegen, wodurch das Niederdrücken des Fahrpedals erschwert und dem Fahrer ein mit dem Fuß fühlbares Signal zur Verringerung der Geschwindigkeit bzw. zur Vergrößerung des Abstands zum vorausfahrenden Fahrzeug gegeben wird. Die zulässigen Betriebsbedingungen, wie beispielsweise eine geltende Höchstgeschwindigkeit, werden z.B. mit einem Telematiksystem zur Verkehrszeichenerkennung erfasst und mit der momentan gefahrenen Geschwindigkeit verglichen. Bei höherer Geschwindigkeit wird vom Motorsteuergerät ein Steuersignal generiert und der Gleichstrommotor für eine kurze Zeitdauer eingeschaltet.

### Offenbarung der Erfindung

Die erfindungsgemäße Fahrpedaleinrichtung mit den Merkmalen des Anspruchs 1 hat den Vorteil, dass nach Erhöhung der Rückstellkraft am Fahrpedal, z.B. um dem Fahrer zu vermitteln, dass die Geschwindigkeit reduziert werden muss, infolge der zugleich erfolgenden Verringerung der Rückstellkraftänderung über den Fahrpedalweg es auch für Personen, die weniger Fußkraft aufbringen können, noch möglich ist, das Fahrpedal weiter durchzutreten, um z.B. einen momentanen Überholvorgang sicher abzuschließen, so dass kein vermeidbares Risiko entsteht.

Durch die in den weiteren Ansprüchen aufgeführten Maßnahmen sind vorteilhafte Weiterbildungen und Verbesserungen der im Anspruch 1 angegebenen Fahrpedaleinrichtung möglich.

Gemäß einer vorteilhaften Ausführungsform der Erfindung wirkt die Stellvorrichtung auf eine zur Rückstellkraft am Fahrpedal beitragende Rückstellfeder derart ein, dass mit Einstellung der größeren Rückstellkraft die Federrater der Rückstellfeder verkleinert wird. Durch diese Maßnahme lässt sich bei Fahrpedaleinrichtungen, in denen üblicherweise die Rückstellkraft am Fahrpedal durch eine oder mehrere Rückstellfedern erzeugt wird, eine solche Reduzierung der Rückstellkraftänderung über den Pedalweg in technisch einfacher Weise realisieren.

Gemäß einer vorteilhaften Ausführungsform der Erfindung weist die Stellvorrichtung bei einer als Schraubenfeder ausgebildeten Rückstellfeder Mittel zum Variieren der Zahl der wirksamen Federwindungen der Schraubenfeder auf. Dadurch lässt sich bei Fahrpedaleinrichtungen, die Schraubenfedern in Form von Druck- oder Zugfedern aufweisen, die Stellvorrichtung als ein leichtes, robustes und kleinvolumiges Modul realisieren, das kostengünstig zu fertigen und einfach zu montieren ist, wenig Einbauraum beansprucht und somit einer Miniaturisierung der Fahrpedaleinrichtung entgegenkommt. Die Stellvorrichtung ist bei allen konstruktiven Varianten von Fahrpedal und Fahrpedalaufhängung einsetzbar, soweit diese als Schraubenfedern ausgebildete Rückstellfedern aufweisen. Anders als bei den bekannten Stellvorrichtungen, die ausschließlich die Vorspannung der Rückstellfedern verändern, wird durch die abhängig von den Betriebsbedingungen durchgeführte Anpassung der Zahl der wirksamen Windungen der Schraubenfeder auch die Kennlinie der Schraubenfeder beeinflusst. Je größer die Zahl der wirksamen Federwindungen ist, desto größer wird - wie gewollt - die Vorspannung der Schraubenfeder und deren Rückstellkraft, aber auch desto kleiner wird die Federrate, also die Teilheit der Federkennlinie.

Der Einbau eines mechanischen Kickdown in das Fahrpedal ist weiterhin möglich. Über eine Krafterhöhung lässt sich auch eine Foot-Rest-Function realisieren, so dass bei längerer Fahrstrecke mit gleichbleibender Geschwindigkeit sich der Fuß am Fahrpedal ausruhen kann. Alle Hauptfunktionen des Fahrpedals, z.B. Hysterese, Redundanz, Signalrückmeldung, Volllast, Leerlauf, bleiben durch den Einbau der Stellvorrichtung in die Fahrpedaleinrichtung unberührt.

Gemäß einer vorteilhaften Ausführungsform der Erfindung weisen die Mittel zum Variieren der Zahl der wirksamen Windungen der Schraubenfeder ein Gewindegehäuse mit Innengewinde, in die ein Federendabschnitt der Schraubenfeder verschraubbar ist, und ein die Schraubenfeder drehendes Einstellglied auf, das motorisch in einander entgegengesetzten Drehrichtungen antreibbar ist. Durch Drehen des Einstellgliedes in die eine oder andere Drehrichtung werden mehr oder weniger Federwindungen in das Innengewinde des Gewindegehäuses eingeschraubt und verlieren damit ihre Wirksamkeit für die Federfunktion der Rückstellfeder. Bei konstanter wirksamer Federlänge nimmt die Zahl der Windungen ab oder zu, wodurch zusätzlich die Vorspannkraft der Feder verkleinert oder vergrößert wird.

Gemäß einer vorteilhaften Ausführungsform der Erfindung ist das Verstellglied als ein auf dem Gewindegehäuse drehbar gelagerter Zapfen mit zur Schraubenachse koaxialer Zapfenachse ausgebildet, an dem das Federende des im Gewindegehäuse verschraubbaren Federendabschnitts festgelegt ist. Dabei ragt vorzugsweise der Zapfen in den Federendabschnitt hinein und weist einen in Zapfenachsrichtung sich erstreckenden, diametralen Führungsschlitz auf, in den das radial abgeknickte Federende eingesteckt ist. Beim Drehen des Zapfens und dadurch bewirkten Verschrauben der Schraubenfeder im Gewindegehäuse kann sich das Federende axial nach oben oder unten bewegen, je nach dem ob die Schraubenfeder tiefer in das Gewindegehäuse eingeschraubt oder weiter aus dem Gewindegehäuse herausgeschraubt wird.

Gemäß einer vorteilhaften Ausführungsform der Erfindung ist der die Schraubenfeder drehende Zapfen mit einem koaxialen Zahnrad versehen, das entweder am Zapfen befestigt oder einstückig mit diesem verbunden ist. Über das Zahnrad und einem ggf. dazwischengeschalteten Getriebe ist der Zapfen von einem elektrischen Stellmotor, abhängig von den Betriebsbedingungen des Motors des Kraftfahrzeugs, in die eine oder andere Drehrichtung antreibbar.

Gemäß einer vorteilhaften Ausführungsform der Erfindung ist das Fahrpedal in einem Lagerbock schwenkbar gehalten und das Gewindegehäuse im Lagerbock befestig. Alternativ kann das Gewindegehäuse auch Teil des Lagerbocks sein. Die Schraubenfeder ist als Druckfeder ausgebildet, die sich an einem am Fahrpedal ausgebildeten Widerlager abstützt. Um ein Ausknicken der Druckfeder zu vermeiden ist das Widerlager vorteilhaft mit einer den vom Gewindegehäuse abgekehrten Endabschnitt der Schraubenfeder aufnehmenden Führungshülse versehen.

Gemäß einer vorteilhaften Ausführungsform der Erfindung sind zwei nebeneinander angeordneten Druckfedern vorgesehen, wobei jede Druckfeder Teil einer Stellvorrichtung ist, und beide Stellvorrichtungen gemeinsam vom Stellmotor betätigt werden.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
- Fig. 1: eine perspektivische Darstellung einer Fahrpedaleinrichtung für ein Kraftfahrzeug,
- Fig. 2: ausschnittweise einen Schnitt längs der Linie II - II in Fig. 1, ver- größert dargestellt.
- Fig.3: eine Darstellung des Verlaufs der Rückstellkraft F_{R} der Fahrpe- daleinrichtung über den Schwenkwinkel α des Fahrpedals.

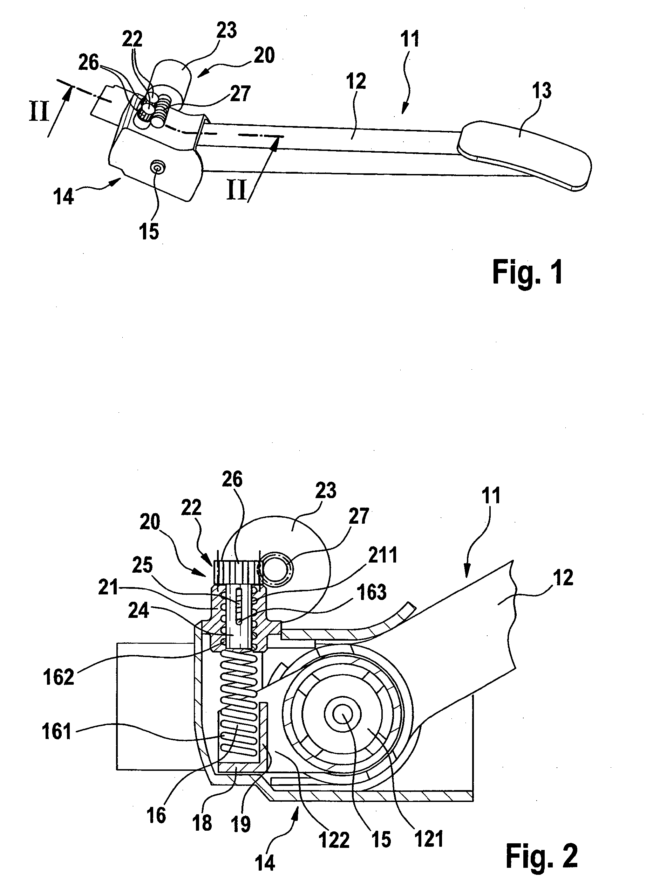

Die in Fig. 1 in perspektivischer Ansicht skizzierte Fahrpedaleinrichtung für ein Kraftfahrzeug weist ein Fahrpedal 11, bestehend aus einem Fahrpedalhebel 12 und einer an dessen einem Ende angeordneten Fußplatte 13, sowie einen am Kraftfahrzeug festgelegten Lagerbock 14 auf, in dem der Fahrpedalhebel 12 mit seinem von der Fußplatte 13 abgekehrten Ende um eine Achse 15 schwenkbar gehalten ist. Der Lagerbock 14 ist als einseitig offener Hohlkörper ausgebildet. Die Achse 15 ist in den Seitenwänden aufgenommen und trägt das als Hebelkopf 121 ausgebildete Ende des Fahrpedalhebels 12. Das Fahrpedal 11 ist mit einer Rückstellkraft beaufschlagt, die das vom Fahrerfuß unbelastete Fahrpedal 11 in die Leerlaufstellung zurückstellt. Zur Änderung der Rückstellkraft am Fahrpedal 11, z.B. abhängig von den Betriebsbedingungen des Kraftfahrzeugs, um dadurch dem Fahrer ein haptisches Signal zu vermitteln, dass aktuelle Betriebsbedingungen eine andere Einstellung des Fahrpedals 11 erfordern, ist im Lagerbock 14 eine Stellvorrichtung 20 integriert, die derart ausgebildet ist, dass mit der Einstellung einer größeren Rückstellkraft am Fahrpedal 11 zugleich die Rückstellkraftänderung über den Fahrpedalweg abnimmt. Dabei wirkt die Stellvorrichtung 20 auf eine zur Rückstellkraft am Fahrpedal 11 beitragende Rückstellfeder derart ein, dass mit Einstellung der größeren Rückstellkraft die Federrate der Rückstellfeder verkleinert wird. Im dargestellten Ausführungsbeispiel ist die Rückstellfeder eine Schraubenfeder 16 und die Stellvorrichtung 20 weist Mittel zum Variieren der Zahl der wirksamen Federwindungen der Schraubenfeder 16, also derjenigen Federwindungen, die noch für den Federweg beim Schwenken des Fahrpedals 11 zur Verfügung stehen. Diese Mittel weisen ein Gewindegehäuse 21 mit einem Innengewinde 211, in dem der vom Widerlager 18 abgekehrte Federendabschnitt 162 der Schraubenfeder 16 verschraubbar ist, und ein die Schraubenfeder 16 zwecks Verschrauben des Federendabschnitts 162 drehendes, motorisch antreibbares Einstellglied 22 auf.

Im dargestellten Ausführungsbeispiel ist z.B. das Einstellglied 22 als ein in dem Gewindegehäuse 21 drehbarer gelagerter Zapfen 24 mit einer zur Schraubenfederachse koaxialen Zapfenachse ausgebildet, in dem das Federende 163 am Federendabschnitt 162 der Schraubenfeder 16 festgelegt ist. Der Zapfen 24 ragt in den Federendabschnitt 162 hinein und trägt einen in Zapfenachsrichtung sich erstreckenden Führungsschlitz 25, der z.B. den Zapfen 24 diametral durchdringt. Das Federende 163 ist radial von der letzten Federwindung der Schraubenfeder 16 abgeknickt und in den Führungsschlitz 25 eingesteckt. Der Zapfen 24 ist an seinem aus dem Gewindegehäuse 21 austretenden Stirnende an einem koaxialen Zahnrad 26 befestigt oder mit dem Zahnrad 26 einstückig ausgeführt. Das Zahnrad 26 stützt sich über ein Gleitlager auf der Stirnseite des Gewindegehäuses 21 ab, und ist über ein Getriebe 27, das z.B. ein Schneckengetriebe ist, von einem Stellmotor 23 antreibbar. Der Stellmotor 23 ist an einem Motorsteuergerät angeschlossen.

Im dargestellten Ausführungsbeispiel sind zwei als Druckfedern ausgebildete Schraubenfedern 16 nebeneinander angeordnet, von denen in Fig. 2 nur die hintere Schraubenfeder 16 zu sehen ist. Die beiden Schraubenfedern 16 stützen sich mit ihrem einen Federende an einem am Hebelkopf 121 ausgebildeten Widerlager 18 und mit ihrem anderen Federende an der dem Widerlager 18 gegenüberliegenden Seite des Lagerbocks 14 ab. Das Widerlager 18 ist an einer vom Hebelkopf 121 diametral zum Fahrpedalhebel 12 wegstrebenden Nase 122 angeordnet, so dass beim Schwenken des Fahrpedalhebels 12 in Fig. 2 im Uhrzeigersinn die als Druckfedern ausgebildeten Schraubenfedern 16 zusammengedrückt werden und damit die Rückstellkraft am Fahrpedal ansteigt. Um ein Ausknicken der Druckfedern 16 beim Niederdrücken des Fahrpedals 11 zu verhindern, ist das Widerlager 18 mit einer Führungshülse 19 versehen, die die am Widerlager 18 sich abstützenden Endabschnitte der Schraubenfedern 16 aufnimmt. Für jede ausgebildete Schraubenfeder 16 ist eine Stellvorrichtung vorgesehen (Fig. 1). In der Schnittdarstellung der Fig. 2 ist nur die hintere der beiden nebeneinander angeordneten Stellvorrichtungen 20 zu sehen. Beide Stellvorrichtungen 20 werden von dem Getriebe 24 angetrieben, das mit den Zahnrädern 26 beider Stellvorrichtungen 20 in Eingriff steht (Fig. 1).

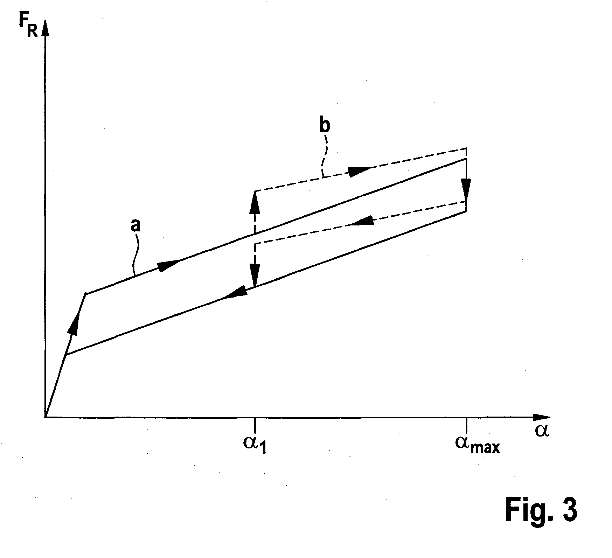

Im Normalbetrieb ist die Schraubenfeder 16 maximal in das Gewindegehäuse 12 eingeschraubt, so dass das Federende 163 an dem in Fig. 2 oberen Ende des Führungsschlitzes 25 anschlägt. In der Stellvorrichtung 20 ist die kleinste Windungszahl der Schraubenfedern 16 eingestellt. Die beiden Schraubenfedern 16 erzeugen am Fahrpedal 11 eine bestimmte Rückstellkraft, die beim Niederdrücken des Fahrpedalhebels 12 in Fig. 2 im Uhrzeigersinn durch das Zusammendrücken der Schraubenfeder 16 entsprechend der Federkennlinie der Schraubenfeder 16, d.h. deren Kraft-Weg-Diagramm stetig zunimmt. Die in Fig. 3 ausgezogen dargestellte Kennlinie a zeigt den Verlauf der Rückstellkraft F_{R} der Fahrpedaleinrichtung über den Pedalweg, der üblicherweise in Winkelgraden des Schwenkwinkels α des Fahrpedals 11 gemessen wird, im Normalbetrieb. Die Kennlinie a verläuft in Form einer Hysterese, wobei der obere Kennlinienabschnitt den Kraftverlauf für die Auslenkung in Richtung größerer Schwenkwinkel α und der untere Kennlinienabschnitt den Kraftverlauf in Richtung kleinerer Schwenkwinkel α des Fahrpedals 11 veranschaulicht. Die Größe der Hysterese, d.h. der Abstand zwischen dem oberen und dem unteren Kennlinienabschnitt der Kennlinie a, ist abhängig von der Hysterese der Schraubenfedern 16 und den auf das Fahrpedal 11 wirkenden Reibkräften. Bei αₘₐₓ erreicht das Fahrpedal 11 den Volllastanschlag.

Ändern sich die Betriebsbedingungen des Fahrzeugs, z.B. ist es notwendig, die Fahrgeschwindigkeit zu drosseln, so wird entsprechend den geänderten Betriebsbedingungen vom Motorsteuergerät ein Steuersignal an den Stellmotor 23 gegeben, um durch Erhöhen der Rückstellkraft am Fahrpedal 11 dem Fahrer ein haptisches Signal zu geben, dass die Geschwindigkeit zu reduzieren ist, oder am Fahrpedal 11 ein Hemmnis zu erzeugen, dass das weitere Beschleunigen des Fahrzeugs erschwert. Durch das Steuersignal wird der Stellmotor 23 für eine bestimmte Zeitdauer eingeschaltet und dreht über das Getriebe 27 das Zahnrad 26 in jeder Stellvorrichtung 20. Durch den dadurch rotatorisch angetriebenen Zapfen 24 wird die Schraubenfeder 16 in einer solchen Drehrichtung gedreht, dass sich der im Gewindegehäuse 21 einliegende Federendabschnitt 162 aus dem Gewindegehäuse 21 zunehmend ausschraubt. Das Federende 163 schiebt sich im Führungsschlitz 25 nach unten und schlägt schließlich am unteren Ende des Führungsschlitzes 25 an, wie dies in Fig. 2 illustriert ist. Die wirksame Windungszahl der Schraubenfeder 16 ist maximal. Durch die größere Windungszahl nimmt die Vorspannung der Schraubenfeder 16 zu und gleichzeitig die Federrate der Schraubenfeder 16 ab, so dass sich die Federkennlinie zu höherer Federkraft verschiebt und gleichzeitig flacher wird und so gewährleistet ist, dass in einem Notfall das Fahrpedal 11 mit erträglichem Kraftaufwand bis zum Volllastanschlag niedergedrückt werden kann. Die in Fig. 3 gestrichelt dargestellte Kennlinie b veranschaulicht den Kraftanstieg aufgrund einer geänderten Betriebsbedingung, die beispielsweise bei einem Schwenkwinkel α1 des Fahrpedals 11 auftritt, und den weiteren Kraftverlauf beim weiteren Durchtreten des Fahrpedals 11 bis hin zum Volllastanschlag αₘₐₓ. Z.B. wird bei dem Schwenkwinkel α1 eine einzuhaltende Geschwindigkeitsbegrenzung überschritten, was dem Fahrer durch eine zur Geschwindigkeitserhöhung erforderliche größere Pedalkraft als haptisches Signal deutlich gemacht wird. Mit dem Kraftanstieg wird zugleich die Steigung der Kennlinie b gegenüber der Steigung der Kennlinie a verkleinert, so dass der Kraftaufwand zum weiteren Niederdrücken des Fahrpedals 11 bis zum Volllastanschlag bei αₘₐₓ mit zunehmendem Schwenkwinkel α weniger stark ansteigt als im gleichen Abschnitt der Kennlinien a, also in der Kennlinie b die Rückstellkraftänderung über den Fahrpedalweg im Vergleich zur Kennlinie a reduziert bzw. kleiner ist bzw. abnimmt.

Anders als in Fig. 2 dargestellt ist, können die beiden Gewindegehäuse 21 für die beiden Schraubenfedern 16 auch einstückiger Bestandteil des Lagerbocks 14 und die Schraubenfedern 16 bei stehend - und nicht wie hier- hängend ausgeführtem Fahrpedal 11 auch Zugfedern sein.

Als Rückstellfeder können auch andere Federn als Schraubenfedern eingesetzt werden, z.B. Spiral- oder Tellerfedern. Die Rückstellkraft am Fahrpedal kann auch mit anderen Mitteln als Rückstellfedern erzeugt werden, z.B. elektromotorisch.

## Patentansprüche

1. Fahrpedaleinrichtung für ein Kraftfahrzeug, mit einem mit einer Rückstellkraft beaufschlagten Fahrpedal (11) und mit einer Stellvorrichtung (20) zur Einstellung der Rückstellkraft, **dadurch gekennzeichnet, dass** die Stellvorrichtung (20) derart ausgebildet ist, dass mit Einstellung einer größeren Rückstellkraft am Fahrpedal zugleich die Rückstellkraftänderung über den Fahrpedalweg abnimmt.

2. Fahrpedaleinrichtung nach Anspruch 1, **dadurch gekennzeichnet, dass** die Stellvorrichtung (20) auf eine zur Rückstellkraft am Fahrpedal (11) beitragende Rückstellfeder derart einwirkt, dass mit Einstellung der größeren Rückstellkraft die Federrate der Rückstellfeder verkleinert wird.

3. Fahrpedaleinrichtung nach Anspruch 2, **dadurch gekennzeichnet, dass** die Rückstellfeder eine Schraubenfeder (16) ist und die Stellvorrichtung (20) Mittel zum Variieren der Zahl der wirksamen Federwindungen der Schraubenfeder (16) aufweist.

4. Fahrpedaleinrichtung nach Anspruch 3, **dadurch gekennzeichnet, dass** die Mittel ein Gewindegehäuse (21) mit Innengewinde (211), in der ein Federendabschnitt (163) der Schraubenfeder (16) verschraubbar ist, und ein die Schraubenfeder (16) drehendes Einstellglied (22) aufweisen, das motorisch in inversen Drehrichtungen antreibbar ist.

5. Fahrpedaleinrichtung nach Anspruch 4, **dadurch gekennzeichnet, dass** das Einstellglied (22) ein im Gewindegehäuse (21) drehbar gelagerten Zapfen (24) mit zur Schraubenachse koaxialer Zapfenachse ist und dass das Federende am Federendabschnitt (162) der Schraubenfeder (16) im Zapfen (24) längs der Zapfenachse begrenzt verschiebbar festgelegt ist.

6. Fahrpedaleinrichtung nach Anspruch 5, **dadurch gekennzeichnet, dass** der Zapfen (24) in den Federendabschnitt (162) hineinragt und einen in Zapfenachsrichtung sich erstreckenden Führungsschlitz (25) aufweist, in den das radial abgeknickte Federende (163) eingesteckt ist.

7. Fahrpedaleinrichtung nach Anspruch 5 oder 6, **dadurch gekennzeichnet, dass** der Zapfen (24) mit einem Zahnrad (26) fest verbunden, vorzugsweise mit diesem einstückig ausgebildet ist.

8. Fahrpedaleinrichtung nach Anspruch 7, **dadurch gekennzeichnet, dass** das Zahnrad (26) über ein Getriebe (27), vorzugsweise ein Schneckengetriebe, von einem Stellmotor (23) antreibbar ist.

9. Fahrpedaleinrichtung nach einem der Ansprüche 4 bis 8, **dadurch gekennzeichnet, dass** das Fahrpedal (11) in einem Lagerbock (14) schwenkbar gehalten ist, dass das Gewindegehäuse (21) im Lagerbock (14) befestigt oder Teil des Lagerbocks (14) ist und dass die Schraubenfeder (16) eine Druckfeder ist, die sich mit ihrem vom Gewindegehäuse (21) abgekehrten Ende an einem am Fahrpedal (11) ausgebildeten Widerlager (18) abstützt.

10. Fahrpedaleinrichtung nach Anspruch 9, **dadurch gekennzeichnet, dass** zwei Druckfedern nebeneinander angeordnet sind und jede am Widerlager (18) sich abstützende Druckfeder mit ihrem vom Widerlager (18) abgekehrten Federendabschnitt (162) in das Innengewinde (211) je eines im Lagerbock (14) vorgehaltenen Gewindegehäuses (21) eingeschraubt ist und dass die Druckfedern von je einem Einstellglied (22) drehbar und die Einstellglieder (22) gemeinsam von einem elektrischen Stellmotor (23) antreibbar sind.

## Claims

1. Accelerator-pedal device for a motor vehicle, having an accelerator pedal (11) which is loaded with a restoring force and having an actuating apparatus (20) for setting the restoring force, **characterized in that** the actuating apparatus (20) is configured in such a way that the restoring-force change across the accelerator-pedal travel decreases at the same time as a greater restoring force is set at the accelerator pedal.

2. Accelerator-pedal device according to Claim 1, **characterized in that** the actuating apparatus (20) acts on a restoring spring which contributes to the restoring force at the accelerator pedal (11), in such a way that the spring rate of the restoring spring is reduced as the greater restoring force is set.

3. Accelerator-pedal device according to Claim 2, **characterized in that** the restoring spring is a helical spring (16) and the actuating apparatus (20) has means for varying the number of active spring windings of the helical spring (16).

4. Accelerator-pedal device according to Claim 3, **characterized in that** the means have a threaded housing (21) with internal thread (211), in which threaded housing (21) a spring-end section (163) of the helical spring (16) can be screwed, and a setting member (22) which rotates the helical spring (16) and can be driven by motor in inverse rotational directions.

5. Accelerator-pedal device according to Claim 4, **characterized in that** the setting member (22) is a journal (24) which is mounted rotatably in the threaded housing (21) and has a journal axis which is coaxial with respect to the screw axis, and **in that** the spring end at the spring-end section (162) of the helical spring (16) is fixed in the journal (24) such that it can be displaced to a limited extent along the journal axis.

6. Accelerator-pedal device according to Claim 5, **characterized in that** the journal (24) protrudes into the spring-end section (162) and has a guide slot (25) which extends in the journal-axis direction and into which the spring end (163) which is bent away radially is plugged.

7. Accelerator-pedal device according to Claim 5 or 6, **characterized in that** the journal (24) is connected fixedly to a gearwheel (26), preferably is configured in one piece with the latter.

8. Accelerator-pedal device according to Claim 7, **characterized in that** the gearwheel (26) can be driven by an actuating motor (23) via a gear mechanism (27), preferably a worm gear mechanism.

9. Accelerator-pedal device according to one of Claims 4 to 8, **characterized in that** the accelerator pedal (11) is held pivotably in a bearing block (14), **in that** the threaded housing (21) is fastened in the bearing block (14) or is part of the bearing block (14), and **in that** the helical spring (16) is a compression spring which is supported with its end which is remote from the threaded housing (21) on an abutment (18) which is formed on the accelerator pedal (11).

10. Accelerator-pedal device according to Claim 9, **characterized in that** two compression springs are arranged next to one another, and each compression spring which is supported on the abutment (18) is screwed with its spring-end section (162) which is remote from the abutment (18) into the internal thread (211) of in each case one threaded housing (21) which is provided in the bearing block (14), and **in that** the compression springs can be rotated by in each case one setting member (22), and the setting members (22) can be driven jointly by an electric actuating motor (23).

## Revendications

1. Dispositif de pédale d'accélérateur pour un véhicule automobile, pourvu d'une pédale d'accélérateur (11) sollicitée par le biais d'une force de rappel et d'un dispositif de réglage (20) permettant de régler la force de rappel, **caractérisé en ce que** le dispositif de réglage (20) est réalisé de telle sorte que la variation de force de rappel sur l'ensemble de la course de la pédale d'accélérateur décroit en même temps que le réglage d'une force de rappel est plus important au niveau de la pédale d'accélérateur.

2. Dispositif de pédale d'accélérateur selon la revendication 1, **caractérisé en ce que** le dispositif de réglage (20) agit de telle sorte sur un ressort de rappel contribuant à la force de rappel au niveau de la pédale d'accélérateur (11) qu'en réglant la force de rappel au maximum, le taux de ressort du ressort de rappel diminue.

3. Dispositif de pédale d'accélérateur selon la revendication 2, **caractérisé en ce que** le ressort de rappel est un ressort à vis (16) et que le dispositif de réglage (20) comporte des moyens permettant de faire varier le nombre de bobines de ressort actives du ressort à vis (16).

4. Dispositif de pédale d'accélérateur selon la revendication 3, **caractérisé en ce que** les moyens comportent un carter fileté (21) pourvu d'un filet intérieur (211) dans lequel une section d'extrémité de ressort (163) du ressort à vis (16) peut être vissée et un maillon de réglage (22) faisant pivoter le ressort à vis (16) entraîné par moteur dans des directions de rotation opposées.

5. Dispositif de pédale d'accélérateur selon la revendication 4, **caractérisé en ce que** le maillon de réglage (22) est un tenon (24) disposé de façon à pouvoir pivoter dans le carter fileté (21) et pourvu d'un axe de tenon coaxial par rapport à l'axe de vis et que l'extrémité de ressort est fixée de façon à pouvoir coulisser de façon limitée le long de l'axe de tenon au niveau de la section d'extrémité de ressort (162) du ressort à vis (16) prévu dans le tenon (24).

6. Dispositif de pédale d'accélérateur selon la revendication 5, **caractérisé en ce que** le tenon (24) ressort dans la section d'extrémité de ressort (162) et comporte une fente de guidage (25) s'étendant dans la direction de l'axe du tenon et dans laquelle l'extrémité de ressort (163) coudée dans le plan radial est enfichée.

7. Dispositif de pédale d'accélérateur selon la revendication 5 ou 6, **caractérisé en ce que** le tenon (24) est relié fixement à une roue dentée (26) et est réalisé de préférence d'un seul tenant avec elle.

8. Dispositif de pédale d'accélérateur selon la revendication 7, **caractérisé en ce que** la roue dentée (26) est entraînée par un moteur pas à pas (23) par le biais d'un engrenage (27), de préférence un engrenage sans fin.

9. Dispositif de pédale d'accélérateur selon l'une quelconque des revendications 4 à 8, **caractérisé en ce que** la pédale d'accélérateur (11) est maintenue de façon à pouvoir pivoter dans un support de palier (14), que le carter fileté (21) est fixé dans le support de palier (14) ou fait partie du support de palier (14) et que le ressort à vis (16) est un ressort de pression s'appuyant, avec son extrémité opposée au carter fileté (21), contre un contrepalier (18) réalisé au niveau de la pédale d'accélérateur (11).

10. Dispositif de pédale d'accélérateur selon la revendication 9, **caractérisé en ce que** deux ressorts de pression sont disposés côte à côte et que chaque ressort de pression s'appuyant contre le contrepalier (18) est vissé avec sa section d'extrémité de ressort (162) opposée au contrepalier (18) dans le filet intérieur (211) d'un carter fileté (21) respectif maintenu dans le support de palier (14) et que les ressorts de pression peuvent être respectivement tournés par un maillon de réglage (22) et que les maillons de réglage (22) peuvent être entraînés conjointement par un moteur pas à pas électrique (23).
